# EUROPÄISCHE PATENTANMELDUNG

(11) **EP 1 570 962 A1**
(43) Veröffentlichungstag der Anmeldung: **07.09.2005**
(21) Anmeldenummer: 05001694.8
(22) Anmeldetag: 27.01.2005
(51) Int. Cl.: B26D 7/30, A22C 17/00

(54) **Vorrichtung und Verfahren zum Schneiden von Lebensmittelprodukten**

(30) Priorität: 05.03.2004 DE 102004010900
(71) Anmelder: ALPMA Alpenland Maschinenbau GmbH, 83543 Rott am Inn (DE)
(72) Erfinder: Aschaber, Hans, 83071 Stephanskirchen (DE)
(74) Vertreter: Manitz, Finsterwald & Partner GbR

(57) **Zusammenfassung**

Die Erfindung betrifft eine Vorrichtung zum Schneiden von Lebensmittelprodukten (18) in mehrere Teile (30,32,36,38,40,42,44,46) mit wenigstens einem lang gestreckten Schneidelement (10,12), insbesondere Schneiddraht, einer Transporteinrichtung (16,34,48) zum Transport des Lebensmittelprodukts (18) entlang einer Vorschubrichtung (20) relativ zu dem Schneidelement (10,12), einer Abtasteinrichtung (24) zur zumindest bereichweisen Vermessung des Lebensmittelprodukts (18), Mitteln zur Berechnung der Schneidposition des Schneidelements (10,12), relativ zu dem Lebensmittelprodukt (18) anhand von durch die Vermessung gewonnenen Daten, und Mitteln zur Verstellung des Schneidelements (10,12) relativ zu dem Lebensmittelproduckt (18) in die berechnete Schneidposition, die derart ausgelegt sind, dass das Schneidelement (10,12) vor dem Schneiden senkrecht zur Vorschubrichtung und senkrecht zu seiner Längserstreckung verstellbar und während des Schneidens in der berechneten Schneidposition fixiert ist. Die Erfindung betrifft ferner ein entsprechendes Verfahren.

## Beschreibung

Die Erfindung betrifft eine Vorrichtung zum Schneiden von Lebensmittelprodukten in mehrere Teile mit wenigstens einem lang gestreckten Schneidelement, insbesondere Schneiddraht, und einer Transporteinrichtung zum Transport des Lebensmittelprodukts entlang einer Vorschubrichtung relativ zu dem Schneidelement. Die Erfindung betrifft weiterhin ein entsprechendes Verfahren.

Derartige Vorrichtungen und Verfahren zum Schneiden von Lebensmittelprodukten sind grundsätzlich bekannt. So kann beispielsweise ein Käseblock mittels des oder der Schneidelemente in mehrere stangenförmige Käseriegel aufgeteilt werden. Die Käseriegel können dann nachfolgend mit einem Stückeschneider oder einem CUT jeweils in mehrere Portionen aufgeschnitten werden. Dabei ist es von Vorteil, wenn die Käseriegel jeweils ein Sollgewicht besitzen, das bei festgelegtem Portionsgewicht ein Aufschneiden der Käseriegel des Käseblocks in ausnahmslos gewichtsgleiche Portionen ermöglicht.

Bedingt durch die Herstellung und/oder Lagerung weisen jedoch selbst genormte Käseblöcke zum Teil relativ große Toleranzen hinsichtlich ihrer Abmessungen und/oder ihres Gewichts auf. Dies hat zur Folge, dass auch die aus den Käseblöcken geschnittenen Käseriegel in Form und/oder Gewicht voneinander abweichen können. Die von dem Sollgewicht abweichenden Käseriegel können in der Regel dann nicht mehr in ausnahmslos gewichtsgleiche Portionen aufgeschnitten werden.

Der Erfindung liegt die Aufgabe zugrunde, eine Möglichkeit zu schaffen, ein Lebensmittelprodukt derart in mehrere Teile zu teilen, dass beim nachfolgenden Aufschneiden der Teile in Portionen eine auf das gesamte Lebensmittelprodukt bezogen möglichst große Anzahl gewichtsgleicher, einem vorgegebenen Sollgewicht entsprechender Portionen erreichbar ist.

Erfindungsgemäß wird diese Aufgabe für eine Vorrichtung mit wenigstens einem lang gestreckten Schneidelement und einer Transporteinrichtung gelöst durch
- eine Abtasteinrichtung zur zumindest bereichsweisen Vermessung des Lebensmittelprodukts,
- Mitteln zur Berechnung der Schneidposition des Schneidelements relativ zu dem Lebensmittelprodukt anhand von durch die Vermessung gewonnenen Daten, und
- Mitteln zur Verstellung des Schneidelements relativ zu dem Lebensmittelprodukt in die berechnete Schneidposition, die derart ausgelegt sind, dass das Schneidelement vor dem Schneiden senkrecht zur Vorschubrichtung und senkrecht zu seiner Längserstreckung verstellbar und während des Schneidens in der berechneten Schneidposition fixiert ist.

Erfindungsgemäß wird diese Aufgabe für ein Verfahren, bei dem das Lebensmittelprodukt entlang einer Vorschubrichtung relativ zu wenigstens einem lang gestreckten Schneidelement bewegt wird, dadurch gelöst,
- dass das Lebensmittelprodukt zumindest bereichsweise vermessen und die Schneidposition des Schneidelements relativ zu dem Lebensmittelprodukt anhand durch die Vermessung gewonnener Daten berechnet wird, und
- dass das Schneidelement relativ zu dem Lebensmittelprodukt vor dem Schneiden senkrecht zur Vorschubrichtung und senkrecht zu seiner Längserstreckung in die berechnete Schneidposition verstellt und während des Schneidens in der berechneten Schneidposition fixiert wird.

Die Erfindung zeichnet sich dadurch aus, dass das Schneidelement vor dem Schneiden des Lebensmittelprodukts insbesondere automatisch verstellbar und während des Schneidens in der jeweiligen Schneidposition fixiert ist. Die Schneidposition des Schneidelements, das senkrecht zur Vorschubrichtung und senkrecht zu seiner Längserstreckung verstellbar ist, wird anhand der Abmessungen des Lebensmittelprodukts berechnet, wobei die Abmessungen aus einer zumindest bereichsweisen Vermessung des Lebensmittelprodukts gewonnenen werden. Insbesondere kann bei mehreren nacheinander zu schneidenden Lebensmittelprodukten die Schneidposition des Schneidelements für jedes Lebensmittelprodukt jeweils neu eingestellt werden. Das Schneidelement kann dabei insbesondere auch in eine das Lebensmittelprodukt unsymmetrisch aufteilende Schneidposition verstellbar sein, um so das mit der Erfindung verfolgte Ziel zu erreichen.

Hierdurch ist es insbesondere möglich, dass das Lebensmittelprodukt derart in mehrere Teile geteilt wird, dass bei nachfolgendem Aufteilen der Teile in gewichtsgleiche Portionen festgelegten Gewichts die maximal mögliche Anzahl gewichtsgleicher Portionen aus dem Lebensmittelprodukt gewonnen werden kann. Auf diese Weise kann die Portionsausbeute gegenüber aus dem Stand der Technik bekannten Vorrichtungen und Verfahren, die die Lebensmittelprodukte unabhängig von deren Abweichungen in Form und/oder Gewicht immer an derselben Schneidposition in mehrere Teile aufteilen, in der Regel erhöht werden.

Besonders vorteilhaft ist es, wenn das Schneidelement derart verstellbar ist, dass das Gewicht höchstens eines Teils des durch das Schneidelement geschnittenen Lebensmittelprodukts kein ganzzahliges Vielfaches eines festgelegten Gewichts einer Portion des Lebensmittelprodukts ist. Lediglich dieser Teil kann eine gegenüber dem festgelegten Portionsgewicht untergewichtige Portion bedingen, die nicht verwertet werden kann. Der oder die anderen Teile können jeweils in mehrere ausnahmslos gewichtsgleiche Portionen des festgelegten Gewichts aufgeteilt werden, da all diese Teile jeweils ein Gewicht besitzen, das einem ganzzahligen Vielfachen des festgelegten Gewichts einer Portion des Lebensmittelprodukts entspricht.

Alternativ oder zusätzlich kann das Schneidelement derart verstellbar sein, dass beim nachfolgenden Aufteilen der Teile in gewichtsgleiche Portionen festgelegten Gewichts anfallende, gegenüber dem festgelegten Portionsgewicht untergewichtige Restportionen der Teile in Summe ein Gewicht besitzen, das kleiner ist als das festgelegte Gewicht einer Portion des Lebensmittelprodukts. Hierdurch kann ebenfalls eine maximale Portionsausbeute gewährleistet werden.

Die Schneidposition des Schneidelements ist bevorzugt zusätzlich in Abhängigkeit von dem Gewicht des Lebensmittelprodukts berechenbar. Dies ist insbesondere dann von Vorteil, wenn das Gewicht und/oder die Dichte der Lebensmittelprodukte variiert. Bei unbekanntem Gewicht des Lebensmittelprodukts kann zur Feststellung des Gewichts des Lebensmittelprodukts eine Wiegeeinrichtung vorgesehen sein.

Mehrere Schneidelemente können unabhängig voneinander verstellbar sein. Hierdurch wird insbesondere erreicht, dass die Schneidelemente mit voneinander verschiedenen Schrittweiten und/oder in verschiedene Richtungen verstellt werden können. Dabei kann jedes Schneidelement die für das jeweilige Schneidelement berechnete Schneidposition einnehmen.

Nach einer besonderen Ausgestaltung der Erfindung sind wenigstens zwei senkrecht zueinander orientierte Schneidelemente vorgesehen. Hierdurch kann das Lebensmittelprodukt beispielsweise sowohl senkrecht zu seiner Höhe als auch senkrecht zu seiner Breite geteilt werden.

Ferner kann erfindungsgemäß vorgesehen sein, dass die senkrecht zueinander orientierten Schneidelemente in Vorschubrichtung gesehen hintereinander angeordnet sind. Hierdurch kann beispielsweise erreicht werden, dass zunächst das Lebensmittelprodukt mittels wenigstens eines ersten Schneidelements in mehrere Lagen und dann die Lagen mittels wenigstens eines zweiten, senkrecht zu dem ersten Schneidelement orientierten Schneidelements jeweils in mehrere Riegel geschnitten werden können.

Des Weiteren wird erfindungsgemäß vorgeschlagen, dass die aus einem Lebensmittelprodukt geschnittenen Lagen nacheinander in Riegel geschnitten werden. Insbesondere können die Schneidposition oder Schneidpositionen des oder der zweiten Schneidelemente vor dem Schneiden der jeweils nächsten Lage eines Lebensmittelprodukts verstellt werden, so dass das oder die zweiten Schneidelement für jede Lage individuell eingestellt werden können. Alternativ können die durch das oder die ersten Schneidelemente geschnittenen Lagen auch parallel bzw. gleichzeitig jeweils durch ein oder mehrere zweite Schneidelemente in mehrere Riegel geschnitten werden.

Wenigsten zwei Schneidelemente können parallel zueinander orientiert sein. Hierdurch kann beispielsweise das Lebensmittelprodukt mittels erster Schneidelemente in mehr als zwei Lagen oder eine Lage des Lebensmittelprodukts mittels zweiter Schneidelemente in mehr als zwei Riegel geschnitten werden.

Das oder die Schneidelemente sind bevorzugt im Wesentlichen vertikal oder horizontal angeordnet. Das oder die Schneidelemente können in einer oder mehreren Schneiddrahthalterungen, insbesondere Spannrahmen, gehalten sein. Unabhängig voneinander verstellbare Schneidelemente können in verschiedenen oder in einer gemeinsamen Schneiddrahthalterung angeordnet sein.

Es ist weiterhin bevorzugt, dass die Abtasteinrichtung mehrere, das Lebensmittelprodukt aus verschiedenen Richtungen abtastende Meßsysteme umfasst. Ein Lebensmittelprodukt kann dadurch derart vermessen werden, dass die Querschnittsfläche des Lebensmittelprodukts senkrecht zur Vorschubrichtung bestimmbar ist. Anhand der Querschnittsfläche, der Länge des Lebensmittelprodukts und ggf. des Gewichts des Lebensmittelprodukts kann die Schneidposition des oder der Schneidelemente berechnet werden. Die Meßsysteme können als optische Sensoren, insbesondere Lasersensoren, Laserscanner oder Zeilenkameras, ausgebildet sein.

Weitere bevorzugte Ausführungsformen der Erfindung sind in den Unteransprüchen beschrieben.

Die Erfindung wird nachfolgend anhand eines Ausführungsbeispiels unter Bezugnahme auf die Figuren erläutert; in diesen zeigen:

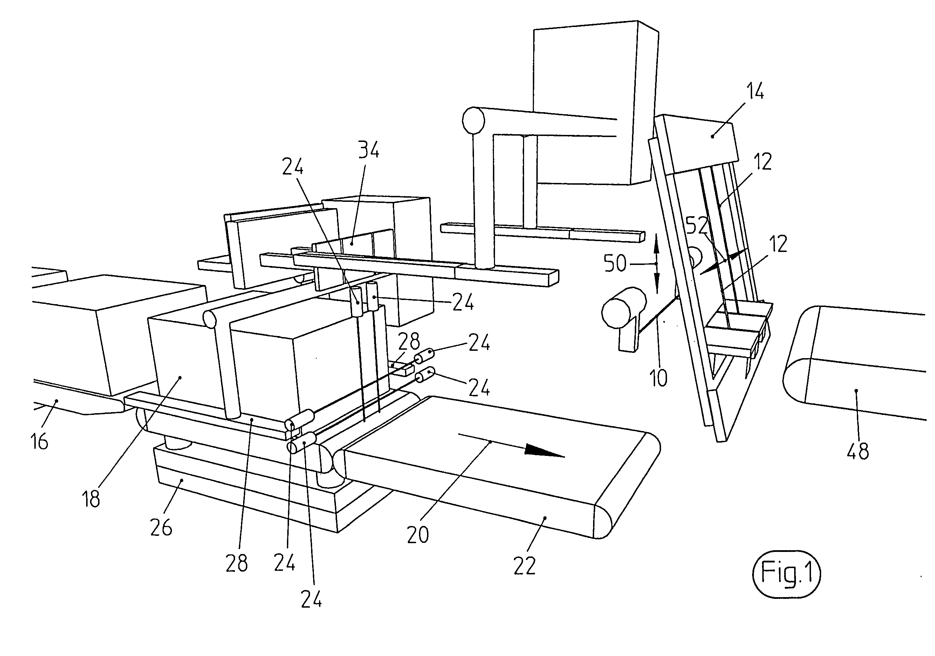

- Fig. 1 bis 4: perspektivische Ansichten einer erfindungsgemäßen Schneidvorrichtung zu verschiedenen Zeiten während des Schneidvorgangs.

Fig. 1 zeigt eine erfindungsgemäße Schneidvorrichtung zum Schneiden von Lebensmittelprodukten in mehrere Teile mit einem ersten, horizontal orientierten Schneiddraht 10, dessen Verstelleinrichtung der Übersichtlichkeit halber nicht dargestellt ist. Die Schneidvorrichtung umfasst ferner zwei parallel zueinander ausgerichtete zweite Schneiddrähte 12, die senkrecht zu dem ersten Schneiddraht 10 orientiert sind und in einem gemeinsamen Schneidrahmen 14 gehalten werden. Die zweiten Schneiddrähte 12 sind gegenüber der Vertikalen geringfügig geneigt.

Die Schneidvorrichtung weist weiterhin ein Transportband 16 auf, mittels dem ein Käseblock 18 entlang einer Vorschubrichtung 20, die durch einen Pfeil gekennzeichnet ist, auf ein Hubband 22 zu bewegt wird. Im Bereich des Übergangs zwischen dem Transportband 16 und dem Hubband 22 sind mehrere Lasersensoren 24 angeordnet, die den Käseblock 18 sowohl seitlich als auch von oben abtasten, so dass an dieser Stelle eine Vermessung des vorbeilaufenden Käseblocks 18 vorgenommen werden kann.

Ein Bereich des Transportbands 16 wird gleichzeitig als Teil einer Wiegeeinrichtung 26 zur Festlegung des Gewichts G des Käseblocks 18 verwendet. An diesem Teil des Transportbands 16 sind weiterhin lineare Zentrierungen 28 zur Zentrierung bzw. mittigen Ausrichtung des Käseblocks 18 bezüglich des Transportbands 16 vorgesehen.

Die Schneiddrähte 10, 12 sind in einer Höhe angeordnet, die über der Höhe des Transportbands 16 liegt. Das Hubband 22 ist dazu ausgelegt, den vermessenen Käseblock 18 derart anzuheben, dass einerseits der Käseblock 18 durch den ersten Schneiddraht 10 in eine obere Lage 30 und eine untere Lage 32 geteilt werden kann (Fig. 2) und andererseits die durch den ersten Schneiddraht 10 geschnittenen Lagen 30, 32 mittels eines Kolbens 34 jeweils in Richtung der zweiten Schneidelemente 12 bewegt werden können (Fig. 3 und 4), wobei die Lagen 30, 32 jeweils in drei Riegel 36, 38, 40 bzw. 42, 44, 46 aufgeteilt werden, wie an anderer Stelle noch näher erläutert wird. Zum Abtransport der Riegel 36, 38, 40, 42, 44, 46 ist in Vorschubrichtung gesehen hinter den zweiten Schneidelementen 12 ein weiteres Transportband 48 vorgesehen.

Der erste Schneiddraht 10 der erfindungsgemäßen Schneidvorrichtung ist mittels der nicht dargestellten Verstelleinrichtung sowohl in vertikaler Richtung als auch entlang der Vorschubrichtung 20 verstellbar. Die zweiten Schneiddrähte 12 sind unabhängig von dem ersten Schneiddraht 10 und unabhängig voneinander mittels einer ebenfalls nicht dargestellten Verstelleinrichtung in horizontaler Richtung senkrecht zur Vorschubrichtung 16 verstellbar. Die Verstellbarkeit des ersten Schneiddrahts 10 in vertikaler Richtung bzw. der zweiten Schneiddrähte 12 in horizontaler Richtung senkrecht zur Vorschubrichtung 20 ist durch einen Doppelpfeil 50 bzw. 52 gekennzeichnet. Die senkrecht zueinander orientierten ersten und zweiten Schneidelemente 10, 12 sind in Vorschubrichtung 20 gesehen hintereinander angeordnet.

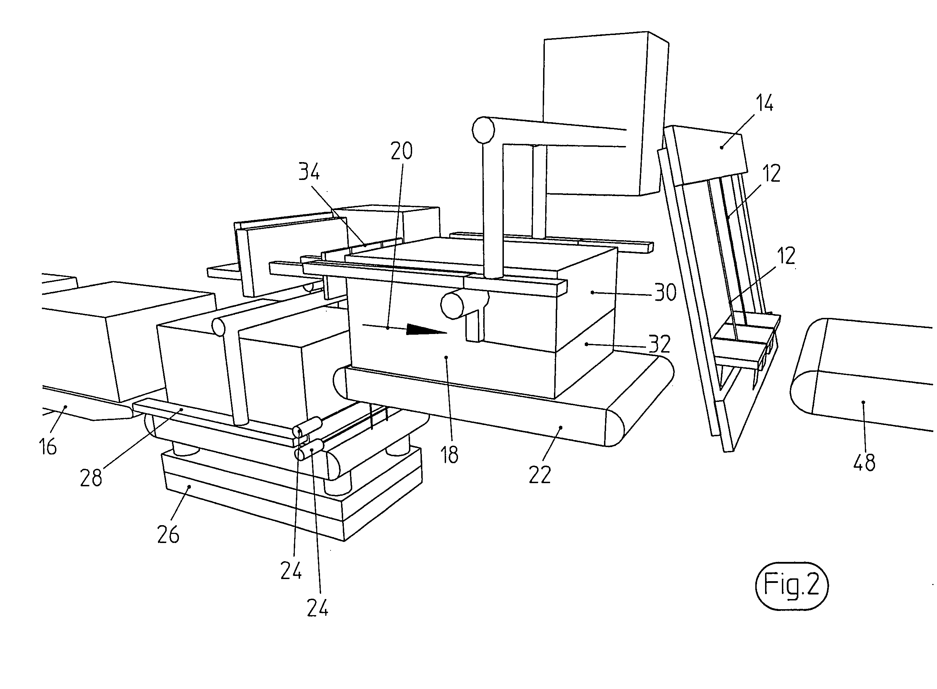

Nachfolgend wird die Funktionsweise der erfindungsgemäßen Schneidvorrichtung unter zusätzlicher Bezugnahme auf die Fig. 2 bis 4 beschrieben.

Zunächst wird der Käseblock 18 mittels des Transportbands 16 entlang der Vorschubrichtung 20 transportiert und von der Wiegeeinrichtung 26 zur Feststellung seines Gewichts G gewogen (Fig. 1). Gleichzeitig wird der Käseblock 18 durch die linearen Zentrierungen 28 mittig zur Vorschubrichtung 20 zentriert.

Anschließend wird der mit seiner Unterseite auf dem Transportband 16 aufliegende Käseblock 18 an den Lasersensoren 24 vorbei in Richtung des Hubbands 22 transportiert. Dabei wird der Käseblock 18 mittels der in drei verschiedenen Raumrichtungen angebrachten Lasersensoren 24 seitlich und von oben vermessen. Aus den derart gewonnenen Vermessungsdaten können die Breite B, die Höhe H und die Länge L des Käseblocks 18 bestimmt werden.

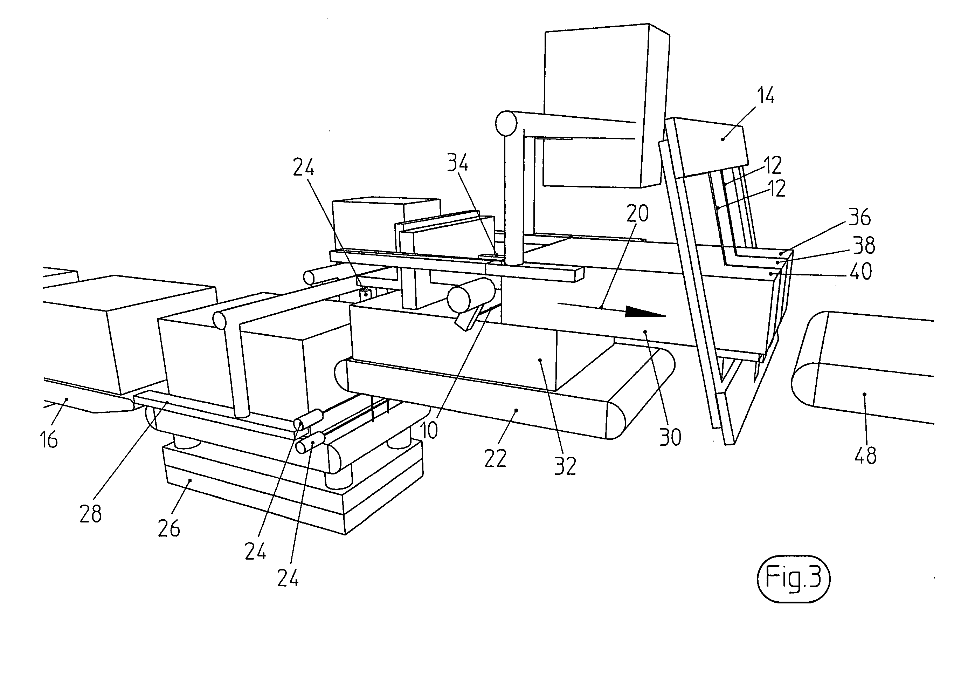

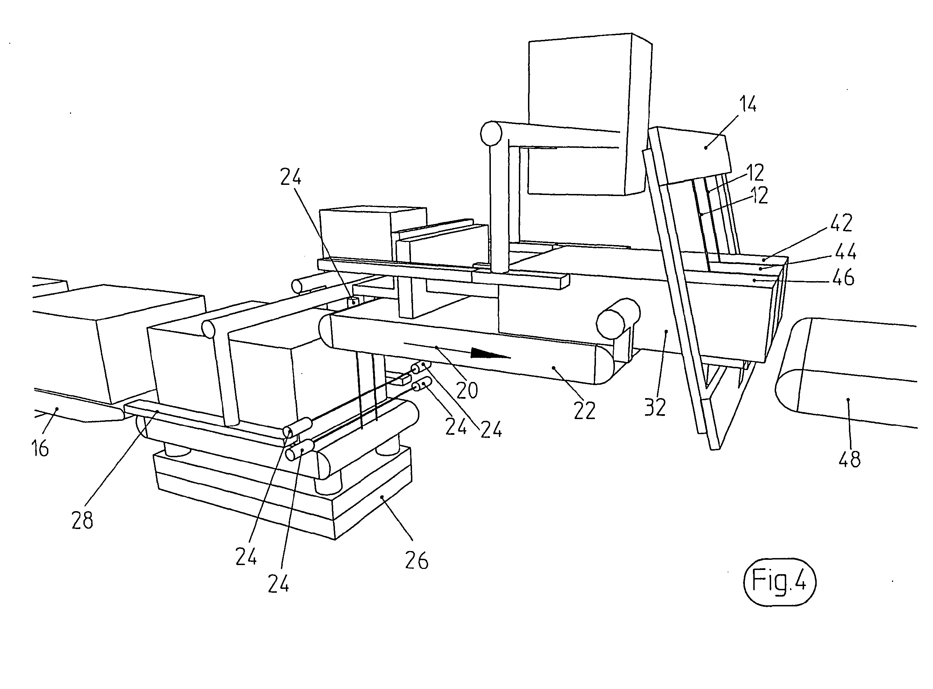

Anhand der durch die Vermessung gewonnenen Daten hinsichtlich der Abmessungen B, H, und L des Käseblocks 18 und des gemessenen Gewichts G des Käseblocks 18 können nun die Schneidpositionen der Schneiddrähte 10, 12 beispielsweise mittels einer nicht dargestellten Steuereinheit derart berechnet werden, dass das Gewicht höchstens eines Riegels 36, 38, 40, 42, 44, 46 (Fig. 3, 4) des durch die Schneidelemente 10, 12 geschnittenen Käseblocks 18 kein ganzzahliges Vielfaches eines festgelegten Gewichts g einer Portion des Käseblocks 18 ist. Insbesondere können dabei die Schneidpositionen der zweiten Schneidelemente 12 für die obere Lage 30 und die untere Lage 32 des Lebensmittelprodukts 18 voneinander abweichen. Die Berechnung der Schneidpositionen der Schneiddrähte 10, 12 wird an anderer Stelle noch beispielhaft erläutert.

Gemäß Fig. 2 wird nach der Berechnung der Schneidpositionen der Schneiddrähte 10, 12 der Käseblock 18 mittels des Hubbands 22 auf eine vorgegebene Höhe angehoben und mittels des ersten Schneidelements 10, das die zuvor berechnete Schneidposition relativ zum Hubband 22 eingenommen hat, in zwei übereinander liegende Lagen 30, 32 geteilt (Fig. 2), wobei der erste Schneiddraht 10 entgegen der Vorschubrichtung 20 durch den Käseblock 18 hindurch bewegt wird. Bei vollständig durchgeschnittenem Käseblock 18 ist der Abstand des ersten Schneiddrahts 10 von den zweiten Schneiddrähten 12 größer als die Längserstreckung des Käseblocks 18 in Vorschubrichtung 20.

Grundsätzlich könnte die Schneidvorrichtung auch derart ausgebildet sein, dass die Höhe des ersten Schneiddrahts 10 nicht verstellbar ist und die berechnete Schneidposition des ersten Schneiddrahts 10 relativ zu dem Käseblock 18 durch unterschiedlich hohes Anheben des Käseblocks 18 mittels des Hubbands 22 eingestellt wird.

Danach wird die obere Lage 30 des Käseblocks 18 mittels des Kolbens 34 in Richtung der zweiten Schneiddrähte 12, die die zuvor für die obere Lage 30 berechneten Schneidpositionen eingenommen haben, geschoben und durch diese hindurchgedrückt, wobei die obere Lage 30 in die Riegel 36, 38, 40 geteilt wird (Fig. 3). Mit der Schiebebewegung des Kolbens 34 kehrt das erste Schneidelement 10 in seine in Ruheposition gemäß Fig. 1 zurück. Danach werden die Riegel 36, 38, 40 durch das weitere Transportband 48 abtransportiert und der Kolben 34 kehrt in seine in den Fig. 1 und 2 gezeigte Ruheposition zurück.

Schließlich wird das Hubband 22 derart angehoben, dass auch die untere Lage 32 des Käseblocks 18 mittels des Kolbens 34 durch die zweiten Schneidelemente 12 hindurchgedrückt werden kann, wobei die Schneiddrähte 12 die zuvor für die untere Lage 32 berechneten Schneidpositionen eingenommen haben (Fig. 4). Die aus der unteren Lage 32 geschnittenen Riegel 42, 44, 46 werden wiederum durch das weitere Transportband 48 abtransportiert und der Kolben 34 kehrt in seine Ruheposition zurück.

Die Erfindung ermöglicht somit, dass die aus einem Käseblock 18 geschnittenen Lagen 30, 32 nacheinander in Riegel 36, 38, 40, 42, 44, 46 geschnitten werden. Weiterhin können die Schneidpositionen der zweiten Schneidelemente 12 vor dem Schneiden der unteren Lage 32 nochmals verstellt werden.

Nachfolgend wird eine mögliche Berechnungsart zur Berechnung der Schneidpositionen der Schneiddrähte anhand eines konkreten Beispiels erläutert.

Ein Käseblock ist mittels eines horizontalen Schneiddrahts in zwei Lagen und die Lagen sind mittels dreier senkrecht zu dem horizontalen Schneiddraht orientierten Schneiddrähten jeweils in vier Riegel zu teilen.

Ein Käseblock besitze eine Länge L = 36,80 cm, eine Breite B = 28,10 cm, eine Höhe H = 17,30 cm und ein Gewicht G = 19,85 kg. Dies entspricht einer Dichte des Käseblocks von etwa 1,11 kg/dm³. Das Gewicht g einer Portion betrage g = 200 g. Das Gewicht G das Käseblocks entspricht damit dem 99,25-fachen des Gewichts g einer Portion. Aus dem Käseblock können folglich bei optimaler Aufteilung 99 Portionen zu je 200 g und eine untergewichtige Portion von 50g gewonnen werden.

Um zu gewährleisten, dass gleichgewichtige Portionen verschiedener Lagen eine möglichst identische Höhe aufweisen, soll die erste Lage 50 Portionen und die zweite Lage 49,25 Portionen umfassen.

Für 50 Portionen muss die erste Lage ein Gewicht von 50 x 200 g = 10 kg bzw. ein Volumen von etwa V₁ = 10 kg / (1,11 kg/dm³) = 9,012 dm³ aufweisen. Bei einer Länge von L = 36,80 cm und einer Breite B = 28,10 cm ergibt dies für die erste Lage eine Höhe von etwa H₁ = 9,012 dm³ / (L x B) = 8,72 cm. Somit ist die Schneidposition des horizontalen Schneiddrahts bestimmt.

Um zu gewährleisten, dass gleichgewichtige Portionen verschiedener Riegel einer Lage eine möglichst identische Breite aufweisen, soll die erste Lage in zwei erste Riegel zu je 13 Portionen und zwei zweite Riegel zu je 12 Portionen aufgeteilt werden.

Für 13 Portionen müssen die ersten Riegel der ersten Lage jeweils ein Gewicht von 13 x 200g = 2,6 kg bzw. ein Volumen von etwa V₁₁ = 2,6 kg /(1,11 kg/dm³) = 2,343 dm³ aufweisen. Bei einer Länge von L = 36,80 cm und einer Höhe von H₁ = 8,72 cm ergibt dies für die ersten Riegel der ersten Lage eine Breite von jeweils etwa B₁₁ = 2,343 dm³ / (L x H₁) = 7,31 cm. Die Breite der zweiten Riegel der ersten Lage kann analog oder durch Vergleich der Breite B₁₁ mit der Breite B berechnet werden: B₁₂ = (B - 2B₁₁) / 2. Somit sind auch die Schneidpositionen der senkrecht zu dem horizontalen Schneiddraht orientierten Schneiddrähte für die erste Lage bestimmt.

Die Schneidpositionen der senkrecht zu dem horizontalen Schneiddraht orientierten Schneiddrähte für die zweite Lage (drei Riegel zu je 12 Portionen, ein Riegel zu 13,25 Portionen) können analog berechnet werden.

Im Ergebnis werden aus zwei Riegeln der ersten Lage jeweils 13 Portionen zu je 200 g und aus den beiden anderen Riegeln der ersten Lage jeweils 12 Portionen zu je 200 g gewonnen. Beim Schneiden der Riegel der ersten Lage entstehen keine untergewichtigen Portionen. Aus drei Riegeln der zweiten Lage werden jeweils 12 Portionen zu je 200 g gewonnen. Aus dem vierten Riegel der zweiten Lage werden 13 Portionen zu je 200 g und eine untergewichtige Portion von 50 g gewonnen.

### Bezugszeichenliste

- 10: erster Schneiddraht bzw. erstes Schneidmittel
- 12: zweiter Schneiddraht bzw. zweites Schneidmittel
- 14: Spannrahmen
- 16: Transportband
- 18: Käseblock
- 20: Vorschubrichtung
- 22: Hubband
- 24: Lasersensor
- 26: Wiegeeinrichtung
- 28: lineare Zentrierung
- 30: obere Lage
- 32: untere Lage
- 34: Kolben
- 36, 38, 40: Riegel
- 42, 44, 46: Riegel
- 48: weiteres Transportband
- 50, 52: Verstellrichtung

## Patentansprüche

1. Vorrichtung zum Schneiden von Lebensmittelprodukten (18) in mehrere Teile (30, 32, 36, 38, 40, 42, 44, 46) mit wenigstens einem lang gestreckten Schneidelement (10, 12), insbesondere Schneiddraht, und einer Transporteinrichtung (16, 34, 48) zum Transport des Lebensmittelprodukts (18) entlang einer Vorschubrichtung (20) relativ zu dem Schneidelement (10, 12),
**gekennzeichnet durch**
eine Abtasteinrichtung (24) zur zumindest bereichsweisen Vermessung des Lebensmittelprodukts (18), Mitteln zur Berechnung der Schneidposition des Schneidelements (10, 12) relativ zu dem Lebensmittelprodukt (18) anhand von **durch** die Vermessung gewonnenen Daten, und Mitteln zur Verstellung des Schneidelements (10, 12) relativ zu dem Lebensmittelprodukt (18) in die berechnete Schneidposition, die derart ausgelegt sind, dass das Schneidelement (10, 12) vor dem Schneiden senkrecht zur Vorschubrichtung (20) und senkrecht zu seiner Längserstreckung verstellbar und während des Schneidens in der berechneten Schneidposition fixiert ist.

2. Vorrichtung nach Anspruch 1,
**dadurch gekennzeichnet,**
**dass** das Schneidelement (10, 12) derart verstellbar ist, dass das Gewicht höchstens eines Teils (30, 32, 36, 38, 40, 42, 44, 46) des durch das Schneidelement (10, 12) geschnittenen Lebensmittelprodukts (18) kein ganzzahliges Vielfaches eines festgelegten Gewichts einer Portion des Lebensmittelprodukts (18) ist.

3. Vorrichtung nach Anspruch 1 oder 2,
**dadurch gekennzeichnet,**
**dass** das Schneidelement (10, 12) auch in eine das Lebensmittelprodukt (18) unsymmetrisch aufteilende Schneidposition verstellbar ist.

4. Vorrichtung nach einem der vorhergehenden Ansprüche,
**dadurch gekennzeichnet,**
**dass** die Schneidposition des Schneidelements (10, 12) zusätzlich in Abhängigkeit von dem Gewicht des Lebensmittelprodukts (18) berechenbar ist, und/oder
**dass** eine Wiegeeinrichtung (26) zur Feststellung des Gewichts des Lebensmittelprodukts (18) vorgesehen ist.

5. Vorrichtung nach einem der vorhergehenden Ansprüche,
**dadurch gekennzeichnet,**
**dass** mehrere Schneidelemente (10, 12) unabhängig voneinander verstellbar sind.

6. Vorrichtung nach einem der vorhergehenden Ansprüche,
**dadurch gekennzeichnet,**
**dass** wenigstens zwei senkrecht zueinander orientierte Schneidelemente (10, 12) vorgesehen sind, wobei insbesondere die senkrecht zueinander orientierten Schneidelemente (10, 12) in Vorschubrichtung (20) gesehen hintereinander angeordnet sind.

7. Vorrichtung nach einem der vorhergehenden Ansprüche,
**dadurch gekennzeichnet,**
**dass** wenigsten zwei Schneidelemente (12) parallel zueinander orientiert sind, und/oder
**dass** das oder die Schneidelemente (10, 12) im Wesentlichen vertikal oder horizontal angeordnet sind.

8. Vorrichtung nach einem der vorhergehenden Ansprüche,
**dadurch gekennzeichnet,**
**dass** das oder die Schneidelemente (10, 12) in einer oder mehreren Schneiddrahthalterungen (14), insbesondere Spannrahmen, gehalten sind.

9. Vorrichtung nach einem der vorhergehenden Ansprüche,
**dadurch gekennzeichnet,**
**dass** die Abtasteinrichtung (24) mehrere, das Lebensmittelprodukt (18) aus verschiedenen Richtungen abtastende Meßsysteme umfasst, wobei insbesondere die Meßsysteme (24) als optische Sensoren, insbesondere Lasersensoren, Laserscanner oder Zeilenkameras, ausgebildet sind.

10. Vorrichtung nach einem der vorhergehenden Ansprüche,
**dadurch gekennzeichnet,**
**dass** das Schneidelement (10, 12) derart verstellbar ist, dass beim nachfolgenden Aufteilen der Teile (30, 32, 36, 38, 40, 42, 44, 46) in gewichtsgleiche Portionen festgelegten Gewichts anfallende, gegenüber dem festgelegten Portionsgewicht untergewichtige Restportionen der Teile (30, 32, 36, 38, 40, 42, 44, 46) in Summe ein Gewicht besitzen, das kleiner ist als das festgelegte Gewicht einer Portion des Lebensmittelprodukts (18).

11. Verfahren zum Schneiden von Lebensmittelprodukten (18) in mehrere Teile (30, 32, 36, 38, 40, 42, 44, 46), wobei das Lebensmittelprodukt (18) entlang einer Vorschubrichtung (20) relativ zu wenigstens einem lang gestreckten Schneidelement (10, 12) bewegt wird,
**dadurch gekennzeichnet,**
**dass** das Lebensmittelprodukt (18) zumindest bereichsweise vermessen und die Schneidposition des Schneidelements (10, 12) relativ zu dem Lebensmittelprodukt (18) anhand durch die Vermessung gewonnener Daten berechnet wird, und
**dass** das Schneidelement (10, 12) relativ zu dem Lebensmittelprodukt (18) vor dem Schneiden senkrecht zur Vorschubrichtung (20) und senkrecht zu seiner Längserstreckung in die berechnete Schneidposition verstellt und während des Schneidens in der berechneten Schneidposition fixiert wird.

12. Verfahren nach Anspruch 11,
**dadurch gekennzeichnet,**
**dass** das Schneidelement (10, 12) in eine das Lebensmittelprodukt (18) unsymmetrisch aufteilende Schneidposition verstellt wird.

13. Verfahren nach Anspruch 11 oder 12,
**dadurch gekennzeichnet,**
**dass** die Schneidposition des Schneidelements (10, 12) zusätzlich in Abhängigkeit von dem Gewicht des Lebensmittelprodukts (18) berechnet wird, und/oder
**dass** das Lebensmittelprodukt (18) zur Feststellung seines Gewichts gewogen wird.

14. Verfahren nach einem der Ansprüche 11 bis 13,
**dadurch gekennzeichnet,**
**dass** mehrere Schneidelemente (10, 12) unabhängig voneinander verstellt werden.

15. Verfahren nach einem der Ansprüche 11 bis 14,
**dadurch gekennzeichnet,**
**dass** das Lebensmittelprodukt (18) mittels wenigstens eines ersten Schneidelements (10) in mehrere Lagen (30, 32) und die Lagen (30, 32) mittels wenigstens eines zweiten, senkrecht zu dem ersten Schneidelement (10) orientierten Schneidelements (12) jeweils in mehrere Riegel (36, 38, 40, 42, 44, 46) geschnitten werden, wobei insbesondere die aus einem Lebensmittelprodukt (18) geschnittenen Lagen (30, 32) nacheinander in Riegel (36, 38, 40, 42, 44, 46) geschnitten werden, wobei insbesondere die Schneidposition oder Schneidpositionen des oder der zweiten Schneidelemente (10, 12) vor dem Schneiden der nächsten Lage (32) eines Lebensmittelprodukts (18) verstellt werden.

16. Verfahren nach einem der Ansprüche 11 bis 15,
**dadurch gekennzeichnet,**
**dass** das Lebensmittelprodukt (18) aus mehreren Richtungen vermessen wird.
